# EUROPÄISCHE PATENTSCHRIFT

(11) **EP 1 017 946 B1**
(45) Veröffentlichungstag und Bekanntmachung des Hinweises auf die Patenterteilung: **25.02.2004**
(21) Anmeldenummer: 98955457.1
(22) Anmeldetag: 15.10.1998
(51) Int. Cl.: F16B 37/02

(54) **MUTTERARTIGES BEFESTIGUNGSELEMENT**
NUT-LIKE FASTENING ELEMENT
ELEMENT DE FIXATION SEMBLABLE A UN ECROU

(30) Priorität: 25.10.1997 DE 29719033 U
(43) Veröffentlichungstag der Anmeldung: 12.07.2000
(73) Patentinhaber: A. Raymond & Cie, 38028 Grenoble (FR)
(72) Erfinder: HULLMANN, Klaus, D-79540 Lörrach (DE); DALER, Helmo, D-79539 Lörrach (DE)
(74) Vertreter: Kirchgaesser, Johannes, Dipl.-Ing.
(86) Internationale Anmeldenummer: PCT/EP1998/006540
(87) Internationale Veröffentlichungsnummer: WO 1999/022152

(56) Entgegenhaltungen:
- EP-A- 0 106 451
- DE-A- 1 575 302
- DE-U- 1 946 929
- FR-A- 1 571 441
- FR-A- 2 429 924
- "TRW Palnut fasteners - high performance, low cost, and lightweight." MACHINE DESIGN, Bd. 61, Nr. 9, 11. Mai 1989, Seite 165 XP000108535 Cleveland, Ohio, USA

## Beschreibung

Die Erfindung betrifft ein mutterartiges. Befestigungselement mit Schraube zur Verbindung von Bauteilen und Platten und bezieht sich insbesondere auf eine aus Federstahl hergestellte, sogenannte Rastmutter, bei der die Schraube gegen den Widerstand einer auffederbaren Verrastungsplatte in das Gewindeloch eingedrückt und dann durch Anziehen der Schraube festgedreht wird.

Die Erfindung geht hierbei aus von dem im Oberbegriff des Anspruchs 1 angegebenen Stand der Technik, welcher beispielsweise aus der FR-A-1 571 441 bekannt ist. Bei dem bekannten Befestigungselement ist der Rastlappen aus der Gewindeplatte herausgestanzt und auf der Seite der Rastkante in Einsteckrichtung der Schraube hochgedrückt, während der Stützlappen auf der anderen Seite mit der Gewindeplatte starr verbunden bleibt. Die Rastkante ist entsprechend der Gewindesteigung der Schraube in einem leichten Bogen ansteigend ausgebildet und in einem solchen Abstand von der Anlagewand angeordnet, daß die Rastkante beim Eindrehen der Schraube in die Gewinderillen eindringt und der Schraubenschaft dabei gleichzeitig auf die gegenüberliegende Anlagewand gedrückt wird.

Bei diesem Befestigungselement wird es als Nachteil empfunden, daß die Schraube auf ihrer ganzen Schaftlänge eingedreht werden muß, bevor der Schraubenkopf auf der zu befestigenden Platte aufliegt und die Schraube angezogen werden kann, was naturgemäß mit einem großen Montage- und Zeitaufwand verbunden ist.

Um diesen Mangel zu beheben, ist es die Aufgabe der Erfindung, das bekannte Befestigungselement so zu gestalten, daß der Leerweg beim Eindrehen der Schraube schnell überwunden werden kann. Diese Aufgabe wird beim vorgenannten Befestigungselement dadurch gelöst, daß der Rastlappen als separate Verrastungsplatte ausgebildet ist, die mit ihrer der Rastkante gegenüberliegenden Kante in einer in die Gewindeplatte eingeformten Lagerrille schwenkbar abgestützt ist und gegen die Durchlaßöffnung federnd niedergedrückt wird.

Derartige Befestigungselemente mit schwenkbar abgestützten Verrastungsplatten sind zwar bereits aus der DE - A - 43 06 870 in Verbindung mit Rohrschellen bekannt. Dort dienen sie dem Zweck, daß der Schellenbügel schnell bis zur Anlage an den Rohrmantel zusammengedrückt und dann durch Anziehen der Schraube über nur wenige Gewindegänge festgeschraubt werden kann. Die Gewindeplatte ist hierbei jedoch fest an der Schelle angeformt und die Verrastungsplatte wird mittels eines Gummirings an ihrem aufschwenkbaren Verrastungsende an der Gewindeplatte in Anlage gehalten. Dieses Befestigungselement läßt sich daher nicht, wie mit der Erfindung angestrebt, als separate Rastmutter verwenden. Außerdem sind die Mittel zum federnden Niederdrücken der Verrastungsplatte sehr aufwendig in der Herstellung.

Die erfindungsgemäß ausgebildete Rastmutter ist nicht nur einfach herzustellen, sondern gestattet auch eine schnelle Verschraubung, da der größte Teil des Schraubenschaftes lediglich gegen die Kraft eines elastischen Gliedes in die Gewindeöffnung eingedrückt wird, bis der Schraubenkopf locker aufliegt. Sodann wird die Schraube bis zur festen Anlage angezogen, wobei die Verrastungsplatte sich mit der bogenförmigen Rastkante in das Gewinde eingräbt. Hierbei wird durch die schwenkbare Lagerung der Verrastungsplatte auf der anderen Seite der Durchlaßöffnung bewirkt, daß die Rastkante infolge der Schräglage praktisch auf die Mitte der Anlagewand gerichtet ist, so daß der Schraubenschaft sicher zwischen Anlagewand und Rastkante eingeklemmt ist.

Die auffederbare Lagerung der Verrastungsplatte wird auf einfache Weise dadurch erreicht, daß die Verrastungsplatte an der Lagerseite zwei seitwärts abstehende Stützlappen aufweist und an der der Lagerrille entgegengesetzte Seite der Gewindeplatte ferner zwei Federstege angeformt und derart herumgebogen sind, daß diese mit ihren Enden die seitwärts abstehenden Stützlappen übergreifen und die Rastkante in Richtung auf die Gewindeplatte niederdrücken.

Bei glatter Ausbildung der Anlagewand bestimmt sich die Haltekraft der Rastmutter durch den Eingriff der Rastkante in die Gewinderille, wobei die Rastkante zweckmäßigerweise so ausgebildet ist, daß sie genau die Gewinderille ausfüllt. Um der Rastmutter eine größere Haltekraft zu verleihen, ist es nach einer Weiterbildung der Erfindung zweckmäßig, wenn die Anlagewand ebenfalls mit Gewinderillen versehen wird, welche den Gewinderillen des Schraubenschaftes entsprechen.

Will man die Rastmutter auf dem Rand einer Trägerplatte befestigen, so wird üblicherweise an der einen Seite der Gewindeplatte ein Klemmschenkel u-förmig angeformt. In diesem Fall kann die auffederbare Lagerung der Verrastungsplatte vorteilhafterweise dadurch erreicht werden, daß beiderseits des Lagerstegs entgegen der Aufsteckrichtung der Mutter zwei Federstege schräg zur Ebene der Gewindeplatte angeformt und etwa in Höhe des Randes der Anlagewand um etwa 180° zurückgebogen sind und dann mit den rückwärts gerichteten Federstegen auf die seitwärts abstehenden Stützlappen der Verrastungsplatten in Richtung auf die Gewindeplatte niederdrücken. Die aufwärts gerichtete Unterseite der Federstege übernimmt hierbei gleichzeitig die Funktion der Einführwand.

In der Zeichnung sind mehrere Ausführungsbeispiele der Erfindung dargestellt und sollen nachfolgend näher erläutert werden. Es zeigt
- Fig.1: die Gewindeplatte einer erfindungsgemäßen Rastmutter in Seitenansicht,
- Fig.2: die gleiche Gewindeplatte in Draufsicht mit strichpunktiert eingezeichneter Verrastungsplatte,
- Fig.3: die zugehörige Verrastungsplatte in Draufsicht,
- Fig.4: die Gewindeplatte mit eingebauter Verrastungsplatte im Anlieferungszustand,
- Fig.5: die zur Fertigung der Gewindeplatte vorgesehene, ausgestanzte Platine mit ausgeformter Anlagewand,
- Fig.6: die Rastmutter im Einbauzustand,
- Fig.7: eine andere erfindungsgemäße Rastmutter mit Klemmschenkel in Seitenansicht,
- Fig.8: die zugehörige Verrastungsplatte in Draufsicht,

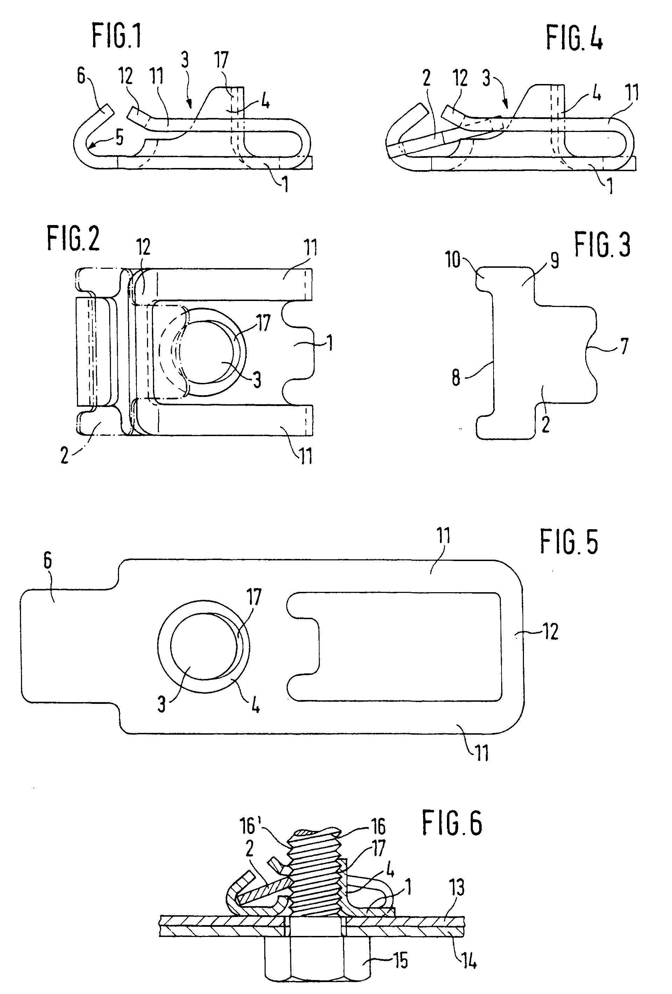

Die in den Figuren 1 bis 6 dargestellte Rastmutter besteht aus einer Gewindeplatte 1, welche aus einer Platine aus Federstahl ( Figur 5 ) herausgestanzt und in die in Figur 1 gezeigte Form gebogen ist, sowie aus einer in Figur 3 gezeigten Verrastungsplatte 2. Die Gewindeplatte 1 besitzt eine Durchlaßöffnung 3 sowie eine die Öffnung halbschalenförmig umgebenden Anlagewand 4. Auf der anderen Seite der Öffnung 3 befindet sich eine Lagerrille 5, welche in die Gewindeplatte 1 durch Zurückbiegen eines an der Gewindeplatte 1 abstehenden Lagersteges 6 eingeformt ist.

Die zugehörige Verrastungsplatte 2 besitzt, wie aus Figur 3 ersichtlich, auf der einen Seite eine bogenförmig ausgebildete Rastkante 7 und auf der der Rastkante gegenüberliegenden Seite eine Stützkante 8, mit welcher die Verrastungsplatte 2 im zusammengebauten Zustand ( Figur 4 ) in der Lagerrille 5 abgestützt ist. Zur lagebestimmten Positionierung der Verrastungsplatte 2 auf der Gewindeplatte 1 befinden sich zwei seitwärts abstehende Stützlappen 9 mit abgewinkelten Enden 10, die den Lagersteg 6 beidseitig umgreifen. Die Verrastungsplatte 2 ist auf der Gewindeplatte 1 so angeordnet, daß erstere mit ihrer Rastkante 7 - in Einsteckrichtung der Schraube gesehen - schräg zur Schraubenachse in die Durchlaßöffnung hineinragt.

An der Gewindeplatte 1 sind beiderseits der Durchlaßöffnung 3 - von der Verrastungsplatte 2 aus gesehen - hinter der Anlagewand 4 zwei über einen Quersteg 12 miteinander verbundene Federstege 11 angeformt und vom Ende der Gewindeplatte 1 aus derart herumgebogen, daß die Federstege 11 im Anlieferungszustand ( Figur 4 ) auf den Stützlappen 9 aufliegen und die Rastkante 7 in Richtung auf die Gewindeplatte 1 federnd niederdrücken.

Die Wirkungsweise der montierten Rastmutter ist in Figur 6 anschaulich dargestellt. Dort sind zwei zusammengehörige Platten 13 und 14 mittels einer aus Kopf 15 und Schaft 16 bestehenden Schraube und der Rastmutter miteinander verschraubt. Beim Einstecken des Schraubenschaftes 16 in die Durchlaßöffnung 3 wird die Rastkante 7 der schwenkbar gelagerten Verrastungsplatte 2 zunächst gegen die Federkraft der Federstege 11 hochgeschwenkt, so daß der Schraubenschaft 16 leicht zwischen Anlagewand 4 und Rastkante 7 hindurchgleiten kann. Sobald der Kopf 15 der Schraube an der Unterseite der Platte 14 anliegt, wird die Schraube angezogen. Hierbei gräbt sich die Rastkante 7 in eine der Gewinderillen des Schraubenschaftes 16 ein und drückt diesen gleichzeitig fest gegen die Anlagewand 4. Die Rastkante 7 ist hierbei so auf die Gewinderillen des Schaftes 16 abgestimmt, daß diese die Rille voll ausfüllt und sich unter der jeweils anliegenden Gewindeflanke abstützt.

Um die Haltekraft der Rastmutter zu erhöhen, ist die Anlagewand im vorliegenden Ausführungsbeispiel mit dem Schraubengewinde entsprechenden Gewinderillen 17 versehen.

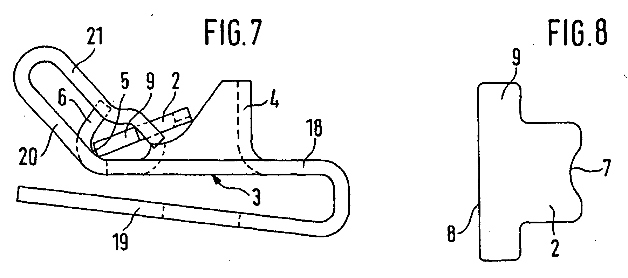

Bei dem in Figur 7 und 8 gezeigten Ausführungsbeispiel ist an der Gewindeplatte 18 in bekannter Weise ein Klemmschenkel 19 U-förmig angeformt und so herumgebogen, daß die Rastmutter auf den Rand einer Trägerplatte aufgesteckt werden kann. Anlagewand 4 und Lagerrille 5 sind genau wie bei der vorbeschriebenen Rastmutter ausgebildet und die Verrastungsplatte 2 ist in gleicher Weise gestützt und schwenkbar gelagert.

Zur abfedernden Lagerung der Verrastungsplatte 2 sind hierbei andere Federmittel erforderlich. Diese sind beiderseits des Lagersteges 6 an der Gewindeplatte 18 abgeformt und verlaufen zunächst von der Anformstelle weg mit Federstegen 20 entgegen der Aufsteckrichtung der Mutter schräg zur Ebene der Gewindeplatte 18. Etwa in Höhe des Oberrandes der Anlagewand 4 werden sie dann um etwa 180° zurückgebogen und reichen mit den rückwärts gerichteten Federstegen 21 so weit herunter, daß sie auf die seitwärts abstehenden Stützlappen 9 mit leichtem Druck aufliegen und die Rastkante 7, wie bei der vorbeschriebenen Rastmutter, in Richtung auf die Gewindeplatte 1 niederdrücken.

## Patentansprüche

1. Mutterartiges Befestigungselement mit Schraube zur Verbindung von Bauteilen und Platten, bestehend aus einer Gewindeplatte ( 1 ) mit einer Durchlaßöffnung ( 3 ) für die Schraube ( 15, 16 ), einer aus der Gewindeplatte ( 1) herausgeformten, die Durchlaßöffnung ( 3 ) halbschalenförmig umgebenden Anlagewand ( 4 ) für den Schraubenschaft ( 16 ) sowie einen auf der anderen Seite der Durchlaßöffnung ( 3 ) angeordneten und mit einer bogenförmig ausgebildeten Rastkante ( 7 ) versehenen Rastlappen, welcher - in Einsteckrichtung der Schraube ( 15, 16 ) gesehen - schräg zur Schraubenachse in die Durchlaßöffnung ( 3 ) hineinragt, **dadurch gekennzeichnet, daß** der Rastlappen als separate Verrastungsplatte ( 2 ) ausgebildet ist, die mit ihrer der Rastkante ( 7 ) gegenüberliegenden Kante ( 8 ) in einer in die Gewindeplatte ( 1 ) eingeformten Lagerrille ( 5 ) schwenkbar abgestützt ist und gegen die Durchlaßöffnung ( 3 ) federnd niedergedrückt wird.

2. Mutterartiges Befestigungselement mit Schraube nach Anspruch 1, **dadurch gekennzeichnet, daß** die Verrastungsplatte ( 2 ) an der Lagerseite zwei seitwärts abstehende Stützlappen ( 9 ) aufweist und daß an der der Lagerrille ( 5 ) entgegengesetzten Seite der Gewindeplatte ( 1 ) ferner zwei Federstege ( 11 ) angeformt und derart herumgebogen sind, daß diese mit ihren Enden ( 12 ) die seitwärts abstehenden Stützlappen ( 9 ) übergreifen und die Rastkante ( 7 ) in Richtung auf die Gewindeplatte ( 1 ) niederdrücken.

3. Mutterartiges Befestigungselement mit Schraube nach Anspruch 1 oder 2, **dadurch gekennzeichnet, daß** die Anlagewand ( 4 ) mit Gewinderillen ( 17 ) versehen ist, welche den Gewinderillen ( 16' ) des Schraubenschaftes ( 16 ) entsprechen.

4. Mutterartiges Befestigungselement mit Schraube nach Anspruch 1, wobei an der Gewindeplatte ( 18 ) ein Klemmschenkel ( 19 ) - von der Verrastungsplatte ( 2 ) aus gesehen - hinter der Anlagewand ( 4 ) U-förmig angeformt ist, **dadurch gekennzeichnet, daß** beiderseits eines die Lagerrille ( 6 ) bildenden Lagersteges ( 6 ) entgegen der Aufsteckrichtung der Mutter zwei Federstege ( 20 ) schräg zur Ebene der Gewindeplatte ( 18 ) angeformt und etwa in Höhe des Randes der Anlagewand ( 4 ) um etwa 180° zurückgebogen sind und dann mit den rückwärts gerichteten Federstegen ( 21 ) auf die seitwärts abstehenden Stützlappen ( 9 ) der Verrastungsplatte ( 2 ) in Richtung auf die Gewindeplatte ( 1 ) niederdrücken.

## Claims

1. A nut-like fixing element with a screw for connecting'components and plates, comprising a screwthreaded plate (1) with a through opening (3) for the screw (15, 16), a support wall (4) which is shaped out of the screwthreaded plate (1) and extends around the through opening (3) in a half-shell shape for the screw shank (16), and a latching tongue which is arranged on the other side of the through opening (3) and which is provided with an arcuately shaped latching edge (7) and which projects into the through opening (3) inclinedly relative to the screw axis - as viewed in the direction of insertion of the screw (15, 16) -, **characterised in that** the latching tongue is in the form of a separate latching plate (2) which with its edge (8) opposite the latching edge (7) is supported pivotably in a mounting channel (5) formed in the screwthreaded plate (1) and is depressed resiliently towards the through opening (3).

2. A nut-like fixing element with a screw according to claim 1 **characterised in that** at the mounting side the latching plate (2) has two laterally projecting support tongues (9) and that at the side of the screwthreaded plate (1) that is opposite to the mounting channel (5) two spring arms (11) are also formed thereon and are bent over in such a way that with their ends (12) they engage over the laterally projecting support tongues (9) and depress the latching edge (7) in a direction towards the screwthreaded plate (1).

3. A nut-like fixing element with a screw according to claim 1 or claim 2 **characterised in that** the support wall (4) is provided with screwthread grooves (17) which correspond to the screwthread grooves (16') of the screw shank (16).

4. A nut-like fixing element with a screw according to claim 1 wherein a clamping limb (19) is formed in a U-shape behind the support wall (4) - as seen from the latching plate (2) - on the screwthreaded plate (18), **characterised in that** two spring arms (20) are formed inclinedly relative to the plane of the screwthreaded plate (18) on both sides of one of the mounting arms (6) forming the mounting channel (5), in opposite relationship to the direction of fitting on the nut, and the spring arms are bent back through about 180° approximately at the height of the edge of the support wall (4) and then with the rearwardly directed spring arms (21) press down on to the laterally projecting support tongues (9) of the latching plate (2) in a direetion towards the screwthreaded plate (1).

## Revendications

1. Organe de fixation formant écrou associé à une vis pour l'assemblage d'éléments de construction et de plaques, se composant d'une plaquette formant filetage (1) comportant une ouverture de passage (3) pour une vis (15, 16), d'une paroi d'appui (4 réalisée par formage à partir de la plaquette formant filetage (1), entourant l'ouverture de passage (3), suivant une configuration en forme de coquille, enserrant la tige (16) de la vis, ainsi que d'une languette d'accrochage disposée sur l'autre côté de l'ouverture de passage (3) et munie d'une arête d'accrochage en arc de cercle (7), qui, pour un observateur placé dans le sens de l'emmanchement de la vis (15, 16), fait saillie obliquement par rapport à l'axe de la vis dans l'ouverture de passage (3), **caractérisé en ce que** la languette d'accrochage se présente sous la forme d'une plaquette d'accrochage par encastrement séparée (2) qui prend appui, au niveau de son arête d'accrochage (7), avec la possibilité de basculer, dans le bord opposé (8) d'une rainure d'appui (5) ménagée dans la plaquette formant filetage (1) et qui est appliquée sous pression par effet «élastique contre l'ouverture de passage (3).

2. Organe de fixation formant écrou associé à une vis selon la revendication 1, **caractérisé en ce que** la plaquette d'accrochage par encastrement (2) présente, sur son côté de portée deux pattes d'appui (9) faisant saillie vers le côté et **en ce qu'**en outre deux lamelles élastiques (11) sont réalisées solidaires par formage du côté de la plaquette formant filetage (1) opposé à la rainure d'appui (5) et sont repliées suivant un tracé curviligne dans une proportion telle que celles-ci viennent, par leurs extrémités (12), cramponner par-dessus les pattes d'appui (9) faisant saillie dans le plan latéral et pousser l'arête d'accrochage (7) dans la direction de la plaquette formant filetage (1).

3. Organe de fixation formant écrou associé à une vis selon la revendication 1 ou 2, **caractérisé en ce que** la paroi d'appui (4) est munie de rainures formant filets (17) qui correspondent aux filets (16') de la tige (16) de la vis.

4. Organe de fixation formant écrou associé à une vis selon la revendication 1, une patte de serrage (19) étant en l'occurrence réalisée solidaire de la plaquette formant filetage (18), pour un observateur placé dans le sens de la plaquette d'accrochage par encastrement (2), derrière la paroi d'appui (4), suivant un tracé en forme d'arceau, **caractérisé en ce que** de part et d'autre d'une lamelle d'appui (6) constituant la rainure d'appui (6), dans le sens contraire de celui de l'emmanchement de l'écrou, deux lamelles élastiques (20) sont réalisées solidaires par formage suivant une disposition oblique par rapport au plan de la plaquette formant filetage (18) et sont, sensiblement à la hauteur du bord de la paroi d'appui (4), repliées vers l'arrière dans une proportion d'environ 180° et sont ensuite poussées vers le bàs, dans la direction de la plaquette formant filetage (1), conjointement aux lamelles élastiques (21) orientées vers l'arrière, sur les pattes d'appui (9) faisant latéralement saillie de la plaquette d'accrochage par encastrement (2).
